# EUROPÄISCHE PATENTSCHRIFT

(11) **EP 0 708 040 B1**
(45) Veröffentlichungstag und Bekanntmachung des Hinweises auf die Patenterteilung: **13.08.1997**
(21) Anmeldenummer: 94116330.5
(22) Anmeldetag: 17.10.1994
(51) Int. Cl.: B65G 17/12

(54) **Becherwerk zur Förderung von Schüttgut**
Bucket elevator for bulk material conveyance
Elévateur à godets pour le transport de matériau en vrac

(43) Veröffentlichungstag der Anmeldung: 24.04.1996
(73) Patentinhaber: Bernhard Beumer Maschinenfabrik KG, D-59269 Beckum (DE)
(72) Erfinder: Van Essen, Josef Dipl.-Ing., D-59269 Beckum (DE); Lauhoff, Hans Dipl.-Ing., D-59369 Beckum (DE)
(74) Vertreter: Hoormann, Walter, Dr.-Ing.

(56) Entgegenhaltungen:
- DE-A- 3 834 488
- US-A- 3 343 654
- SOVIET INVENTIONS ILLUSTRATED Section PQ, Week E09, 14. April 1982 Derwent Publications Ltd., London, GB; Class Q35, AN C4200E & SU-A-831 672 (VNIILITMASH CASTING) 23. Mai 1981
- SOVIET INVENTIONS ILLUSTRATED Section PQ, Week K05, 16. März 1983 Derwent Publications Ltd., London, GB; Class Q35, AN B6267K & SU-A-914 421 (BELO AGRIC MECHN) 23. März 1982
- SOVIET INVENTIONS ILLUSTRATED Section PQ, Week K02, 23. Februar 1983 Derwent Publications Ltd., London, GB; Class Q35, AN A5278K & SU-A-906 833 (LENINGRAD PLEKHANOV MINE) 28. Februar 1982
- PATENT ABSTRACTS OF JAPAN vol. 9, no. 213 (M-408) (1936) 30. August 1985 & JP-A-60 071 410 (SATAKE SEISAKUSHO) 23. April 1985

## Beschreibung

Die Erfindung betrifft ein - auch als Elevator bezeichnetes - Becherwerk zur vertikal- oder Schrägförderung von Schüttgut, insbesondere ein sog. Schöpf-Becherwerk, mit einem jeweils an seinem Kopf und seinem Fuß geführten und umgelenkten, ggf. mehrsträngigen, mittels einer Spanneinrichtung vorgespannten, endlosen Zugorgan wie einem Gurt, (wenigstens) einer Kette oder (wenigstens) einem Seil, an dem - im allgemeinen mit gleichem gegenseitigen Abstand - als Tragorgan für das zu fördernde Schüttgut dienende Becher befestigt sind, welche zu förderndes Schüttgut (= Fördergut) insbesondere bei einem Schöpf-Becherwerk (aber wenigstens zum Teil auch bei einem sog. Aufgabe-Becherwerk) beim Umlauf des Zug- bzw. Tragorgans jeweils nacheinander aus dem Bereich des Becherwerksfußes aufnehmen und im Kopfbereich durch Schwer- und/oder Fliehkraftwirkung wieder abgeben.

Im Rahmen der Becherwerke, bei denen es sich um einen der ältesten Stetigförderer zur senkrechten oder schrägen Aufwärtsförderung von Schüttgut handelt, unterscheidet man Schöpf-Becherwerke von Aufgabe-Becherwerken (also nach der Art der Becherbefüllung), wobei die Becher von Schöpf-Becherwerken allein durch einen Schöpfvorgang gefüllt werden, während ihnen bei Aufgabe-Becherwerken das zu fördernde Schüttgut im wesentlichen durch Aufgabevorrichtungen wie Zulaufschürren, Schwingförderer od. dgl. zugeführt wird, die Becher aber bei ihrem Umlauf natürlich auch Fördergut aus dem sog. Sumpf aufnehmen, wenn dieser sich im Verlaufe der Zeit gebildet hat.

Insbesondere bei Schöpf-Becherwerken, bei denen das Fördergut von den Bechern ausschließlich aus dem im Becherwerksfuß befindlichen sogenannten "Sumpf" geschöpft wird, der durch Zuförderung von außen ständig wieder aufgefüllt wird, kommt es im Verlaufe der Zeit (im allgemeinen relativ rasch) zu einer Verfestigung des Fördergutes, und zwar insbesondere unterhalb der beim Schöpfen durch den äußersten Becherrand der Becher im Sumpf gebildeten Becherbahn- bzw. Schöpfkontur. Dieses ist in mehrfacher Hinsicht höchst nachteilig:

Verdichtet bzw. verfestigt sich nämlich das im Bereich der Schöpfkontur befindliche Schüttgut so sehr, daß es regelrecht verhärtet, so besteht die Gefahr, daß sich die Becher währen ihres Umlaufes jeweils an ihrer Schöpfkante (gleichsam wie ein Baggerzahn) im Becherwerkssumpf festkrallen. Dieses hat zur Folge, daß die Becher - da sie sich dabei im Bereich des unteren, im allgemeinen als Spannorgan für das Tragorgan ausgebildeten Umlenkmittels befinden - eine vertikal nach oben gerichtete Kraft auf das Spannorgan ausüben, mit der Folge, daß bei einem sogenannten Gurtbecherwerk, bei dem das Tragorgan als Fördergurt ausgebildet ist, der Gurt über der jeweiligen Becherbefestigung abknicken und im Verlaufe der Betriebszeit entsprechend beschädigt werden kann. Aber auch bei einem sogenannten Kettenbecherwerk, dessen Tragorgan aus wenigstens einer Kette besteht, kommt es aufgrund der vorstehenden Umstände zu entsprechend großen Auslenkungen mit entsprechenden Beanspruchungen, die zwangsläufig zu einem entsprechend hohen (Ketten-)Verschleiß führen, wobei überdies durch ein Anheben der Kettenrolle(n) die Kettenführung beeinträchtigt wird, so daß die Kette(n) abspringen kann (können).

Um diesen nachteiligen Effekten entgegenzuwirken bzw. sie möglichst zu vermeiden, hat man bisher die auf das Tragorgan ausgeübte Spannkraft entsprechend groß bemessen. Ganz abgesehen davon, daß selbst diese Maßnahme in manchen Fällen nicht ausreicht, um den oben beschriebenen nachteiligen Auswirkungen wirksam zu begegnen, ist auch die erwähnte Erhöhung der Spannkraft des Tragorgans ersichtlich mit Nachteilen verbunden. Denn sie bedingt zunächst einmal einen entsprechenden Aufwand, führt zwangsläufig zu entsprechenden Beanspruchungen der betroffenen Bauteile, und kann dabei ersichtlich u. a. auch einen erhöhten Verschleiß der Becher-Schöpfkanten beim Schöpfvorgang an verhärtetem Fördergut nicht verhindern. Überdies kommt es dabei zu an sich unnötig hohen, zusätzlichen Beanspruchungen an den Becherbefestigungen, die ohnehin schon erheblich sind, so daß es an sich höchst wünschenswert wäre, wenn man die durch eine Verhärtung des Schüttgutes in Becherwerkssumpf entstehenden Probleme vermeiden bzw. erheblich reduzieren könnte.

Zu diesem Zweck hat man bereits sogenannte Luftkanonen mit dem Ziel in den Becherwerksfuß eingebaut, im Becherwerkssumpf verdichtetes/verhärtetes Schüttgut freizuschießen.

Diese Ausbildung bzw. die hiermit verbundene Arbeitsweise hat jedoch den erheblichen Nachteil, daß gleichzeitig zuviel verhärtetes Fördergut (ggf. in Form von dicken und/oder großen Schollen) in die Förderbahn der Becher gelangt, oder/und daß nur relativ schmale Kanäle freigeschossen werden.

Eine andere Möglichkeit, diesem Problem Herr zu werden, besteht darin, den Sumpf in geeigneter Weise von Hand freizuräumen. Dieses bedingt jedoch ein Stillsetzen des Becherwerks, was mit entsprechenden Stillstandszeiten verbunden ist, die für verschiedene Anwendungsfälle mit erheblichen Ausfallkosten verbunden und daher i. d. R. nicht akzeptabel sind.

Der vorliegenden Erfindung liegt demgemäß die Aufgabe zugrunde, Becherwerke der eingangs beschriebenen Gattung unter Vermeidung ihrer Nachteile dahingehend zu verbessern, daß es nicht zu nachteiligen erheblichen Verdichtungen/Verhärtungen des im Becherwerkssumpf befindlichen Schüttgutes kommt, bzw. daß derartige Verdichtungen/Verhärtungen problemlos zu eliminieren sind, und zwar vorzugsweise in einer Weise, daß das den Sumpf bildende Fördergut fortlaufend oder zyklisch gegen frisches Fördergut ausgetauscht wird, ohne dabei den Fördervorgang - und damit auch den dem Becherwerk nachgeschalteten Betriebsablauf - erheblich in nachteiliger Weise zu beeinflussen.

Die Lösung dieser Aufgabe besteht erfindungsgemäß darin, daß im Bereich des Becherwerksfußes unterhalb der beim Schöpfen durch den äußeren Becherrand im Sumpf gebildeten Schöpfkontur ein dynamischer Boden angeordnet ist, der im wesentlichen aus einer am Becherwerksgestell gehaltenen (ggf. in diese integrierten) Membran-Stützplatte od. dgl. sowie wenigstens einer auf deren Oberseite aufliegenden, an ihrem Rand umlaufend - vorzugsweise gasdicht - mit der Membran-Stützplatte verbundenen elastischen Membran besteht, und daß der (Kissen-)Zwischenraum zwischen der Unterseite der Membran und der dieser zugekehrten Oberseite der Membran-Stützplatte mit einer Druckgasquelle verbunden ist.

Dabei kann zwar grundsätzlich die Membran eine gewisse Gasdurchlässigkeit aufweisen, so daß das evtl. stetig, vorzugsweise aber nur von Zeit zu Zeit (ggf. periodisch) dem Kissen-Zwischenraum zugeführte Druckgas das von der Membran und deren Stützplatte gebildete Kissen zwar aufbläst, dabei aber gleichzeitig - ggf. nur an bestimmten Stellen der Membran - ein den Aufbrechvorgang unterstützender Gasstrom in den verhärteten Sumpf gelangt, doch hat sich bei entsprechenden Versuchen gezeigt, daß es zur Erzielung des erstrebten Effektes einer Eliminierung von verdichtetem/verhärtetem Schüttgut aus dem Becherwerkssumpf dieser Maßnahme an sich nicht bedarf, sondern daß es vielmehr sogar im allgemeinen zweckmäßiger ist, die Membran nicht nur an ihrem Rand gasdicht mit ihrer Stützplatte zu verbinden, sondern auch selbst gasdicht auszubilden, und dabei eine Entlüftungseinrichtung vorzusehen, mittels welcher in den Kissenzwischenraum geleitetes Druckgas (wenigstens teilweise) wieder aus dem Kissen-Zwischenraum abzuleiten ist.

Obwohl es grundsätzlich möglich ist, den dynamischen Boden einteilig auszubilden, hat es sich als höchst zweckmäßig herausgestellt, ihn aus mehreren Abschnitten auszubilden, und zwar bei üblichen Becherwerksausbildungen vorzugsweise aus drei oder fünf Abschnitten.

Höchst bevorzugt kann der kissenbildende Zwischenraum des (eines) dynamischen Boden(abschnitte(s) so mit Druckgas beaufschlagt werden, daß der Druck zu Beginn einer Beaufschlagungsphase erheblich höher ist als am Ende des betreffenden Beaufschlagungsintervalls (und ggf. auch bereits über einen erblichen Abschnitt des Intervalls).

Weiterhin hat es sich als sehr vorteilhaft erwiesen, wenn wenigstens ein Abschnitt des dynamischen Bodens am bzw. unmittelbar benachbart zum Boden des Becherwerksgestells angeordnet ist, während die übrigen Abschnitte des dynamischen Bodens zum Boden des Becherwerksgestells angestellt angeordnet sind.

Bei einem am/unmittelbar benachbart zum Boden des Becherwerksgestells angeordneten Abschnitt des dynamischen Bodens kann die Membran-Stützplatte von dem Boden des Becherwerksgestells selbst gebildet oder aber auch gesondert von diesem ausgebildet sein.

Weiterhin hat es sich als höchst vorteilhaft erwiesen, wenn bei der bevorzugten Ausgestaltung, bei welcher der dynamische Boden aus mehreren Abschnitten besteht, die dynamischen Bodenabschnitte jeweils einzeln oder zumindest gruppenweise über eine gesonderte Druckgasleitung mit der Druckgasquelle verbunden sind, um die dynamischen Bodenabschnitt einzeln bzw. gruppenweise entsprechend gesteuert mit Druckgas beaufschlagen (und wieder entgasen) zu können, so daß der verdichtete/verhärtete Schüttgutsumpf partiell aufgebrochen werden kann, und demgemäß dabei jeweils nur relativ wenig verhärtetes, ggf. grobstückiges Material in den Schöpfbereich gerät.

Um diesen Effekt zu erzielen/zu verstärken, kann weiterhin vorgesehen sein, daß ein Aufblasen nicht gleichsam spontan erfolgt, sondern gleichsam zeitverzögert über einen längeren Zeitraum von bspw. ca. 0,5 min.

Im übrigen hat es sich weiterhin als höchst zweckmäßig erwiesen, wenn zwischen der Druckgasquelle und dem (einem) dynamischen Boden(abschnitt) ein Druckspeicher angeordnet ist, dessen Volumen vorzugsweise beachtlich kleiner als das Volumen des Kissen-Zwischenraums des dynamischen Bodens (bzw. eines dynamischen Bodenabschnittes) ist, wie dieses weiter unten anhand eines Ausführungsbeispiels noch im einzelnen erläutert wird, und wenn überdies ggf. zwischen der Druckgasquelle und dem Durckspeicher einerseits und/oder dem Druckspeicher und dem (einen) dynamischen Boden(abschnitt) andererseits ein von der Logik der Steuereinheit betätigbares Ventil angeordnet ist, wobei die Ventile zweckmäßigerweise als pneumatische Steuerventile ausgebildet sein können. Dieses hat u. a. den großen Vorteil, daß sich der Druck selbsttätig von einem hohen auf einen niedrig(er)en Wert einstellt.

Eine höchst bevorzugte weitere Ausgestaltung der vorliegenden Erfindung besteht darin, daß die Membran(en) Bereiche unterschiedliche Elastizität aufweist (aufweisen), und zwar beispielswiese derart, daß ein am Membran-Randbereich befindlicher erster Membranabschnitt der (einer) Membran elastischer ist als der (ein) weiter innen liegender zweiter Membranbereich, wodurch die angestrebte Wirkung des dynamischen Bodens noch erheblich zu verbessern ist, wie ebenfalls weiter unten noch anhand eines Ausführungsbeispiels näher erläutert wird.

Weitere bevorzugte Ausgestaltungen der vorliegenden Erfindung sind in den Unteransprüchen beschrieben.

Die Erfindung ist nachstehend an einem Ausführungsbeispiel unter Bezugnahme auf eine Zeichnung weiter erläutert. Es zeigt:
- Fig. 1: eine etwas schematisierte Seitenansicht des Fußes eines Gurt-Schöpfbecherwerks; und
- Fig. 2: eine etwas schematisierte perspektivische Darstellung eines dynamischen Bodenabschnittes schräg von oben gesehen.

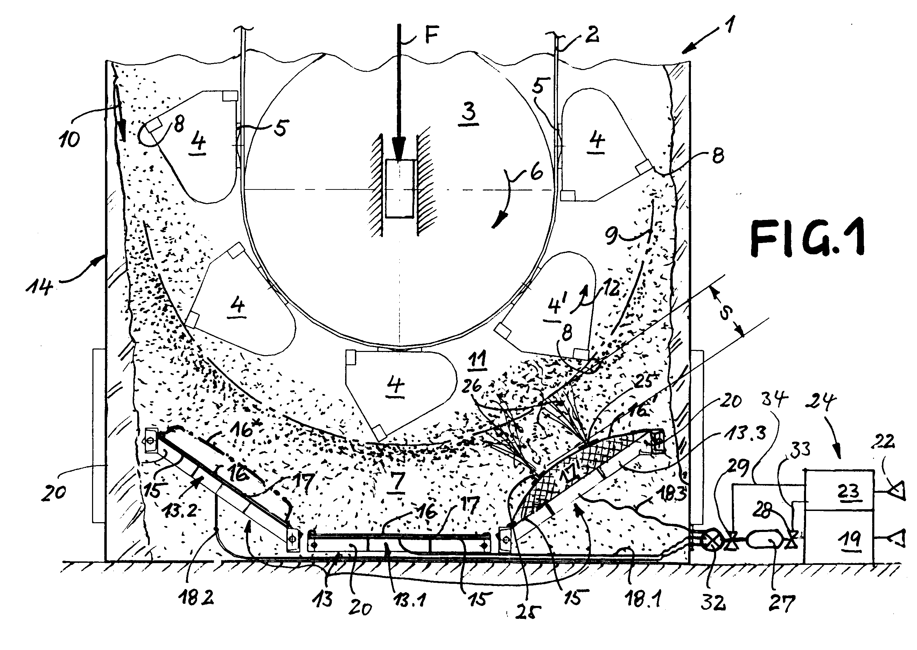

Fig. 1 zeigt (in etwas schematisierter Weise) eine Seitenansicht des Fußes 1 eines als Gurtbecherwerk ausgebildeten Schöpf-Becherwerkes, dessen Tragorgan mithin aus einem endlosen Gurt 2 besteht, der jeweils im (in der Zeichnung nicht dargestellten) Kopf sowie im Fußbereich geführt und umgelenkt ist, wobei die in Fig. 1 erkennbare Umlenktrommel im Becherwerksfuß 1 zugleich als Spanntrommel 3 ausgebildet ist, deren Achse mit einer Spannkraft F beaufschlagt ist. Die Becher 4 sind jeweils über eine Becherbefestigung 5 am Gurt 2 befestigt.

Lediglich der Vollständigkeit halber sei darauf verwiesen, daß als Zugorgan statt eines Gurtes 2 auch wenigstens eine Kette Verwendung finden könnte, die bei einem derartigen Kettenbecherwerk mit einer einzigen als sogenannte Zentralkette mittig angeordnet und an einem Kettenrad (Turas) umgelenkt und gespannt wird. Dabei kommt einer Anwendung der vorliegenden Erfindung bei Becherwerken mit einer (einzigen) Zentralkette deshalb eine besondere Bedeutung zu, weil diese (Ketten-)Becherwerke insbesondere zur Förderung von Schüttgut eingesetzt werden, welches zuvor in sogenannten Walzen-Preßmühlen zerkleinert worden ist und daher aufgrund seiner Konsistenz besonders zum Verdichten/Verfestigen neigt.

Wie aus Fig. 1 der Zeichnung weiterhin ersichtlich ist, erzeugen die Becher 4 beim Umlauf des Gurtes 2 in Richtung des Pfeiles 6 und damit beim Schöpfen von Schüttgut aus dem Sumpf 7 mit ihrem äußeren Rand 8 eine als strichpunktierte Linie angedeutete Schöpfkontur 9. Unterhalb der Schöpfkontur 9 kommt es im Verlaufe des Betriebes (häufig bereits relativ schnell) zu einer im allgemeinen erheblichen Verdichtung des im Sumpf 7 vorhandenen Schüttgutes, welches dem Becherwerksfuß 1 ständig gemäß dem Pfeil 10 von außen zugeführt wird, von den Bechern 4 aber ersichtlich nur bis zur Schöpfkontur 9 aufgenommen werden kann, da das unterhalb der Schöpfkontur 9 befindliche Fördergut außerhalb des Schöpfbereiches 11 liegt, der an seiner oberen Seite durch den Gurt 2 und an seiner unteren Seite durch die Schöpfkontur 9 begrenzt ist, wobei sich das unterhalb der Schöpfkontur 9 im Sumpf 7 befindliche Schüttgut i. a. im Verlaufe der Zeit (ggf. erheblich) verhärtet und damit nicht nur eine zusätzliche Verschleißquelle für die äußeren Ränder 8 der Becher 4 bildet, sondern dabei sogar ein Widerlager bilden kann, welches zu einem gewissen formschlüssigen Eingriff mit den äußeren Rändern 8 der Becher 4 führen kann, so daß diese gemäß dem Pfeil 12 um ihre Becherbefestigung 5 ausgelenkt werden, mit der Folge, daß es zu dem bereits erwähnten Einknicken des Gurtes 2 mit entsprechenden Überdehnungen u. dgl. kommen kann.

Um dieses zu verhindern bzw. diesen höchst nachteiligen Effekt auf ein unschädliches Ausmaß zu reduzieren, ist im Bereich des Becherwerksfußes 1 unterhalb der Schöpfkontur 9 ein im ganzen mit 13 bezeichneten dynamischer Boden angeordnet, der bei dem in Fig. 1 dargestellten Ausführungsbeispiel aus drei Abschnitten 13.1, 13.2 und 13.3 besteht, wobei die Abschnitte 13.1 bis 13.3 im wesentlichen gleich ausgebildet und lediglich in Relation zum Becherwerksgestell 14 unterschiedlich angeordnet sind, nämlich bzgl. des Abschnittes 13.1 parallel zum Boden des Becherwerksgestell 14, und bzgl. der Abschnitte 13.2 und 13.3 schräg ausgestellt zu diesem.

Jeder Abschnitt 13.1 bis 13.3 des dynamischen Bodens 13 weist eine Membran-Stützplatte 15 sowie eine auf deren Oberseite aufliegende Membran 16 auf, die an ihrem Rand umlaufend gasdicht mit der betreffenden Membran-Stützplatte 15 verbunden ist. Der Kissen-Zwischenraum 17 zwischen der Unterseite der Membran 16 und der dieser zugekehrten Oberseite der Membran-Stützplatte 15 ist über eine Schlauchleitung 18 mit einer Druckluftquelle 19 verbunden.

Zwischen der Druckluftquelle 19 und dem dynamischen Boden 13 (genauer gesagt: den dynamischen Bodenabschnitten 13.1, 13.2 und 13.3) ist ein Druckluftspeicher 27 angeordnet, dessen Volumen nennenswert kleiner als das Volumen des Kissen-Zwischenraums 17 jeden dynamischen Bodenabschnittes 13.n ist.

Weiterhin ist zwischen der Druckluftquelle 19 und dem Druckluftspeicher 27 ein pneumatisches Steuerventil 28 angeordnet. Ein weiteres pneumatisches Steuerventil 29 ist hinter dem Druckluftspeicher 27 angeordnet, und zwar vor einem Drei-Wege-Ventil 32, welches wahlweise mit einer, mehreren oder sämtlichen Schlauchleitungen 18.n zu verbinden ist, wobei die Ventile 28, 29 jeweils über eine Steuerleitung 33 bzw. 34 mit dem Steuerungskasten 23 der Steuereinheit 24 verbunden sind.

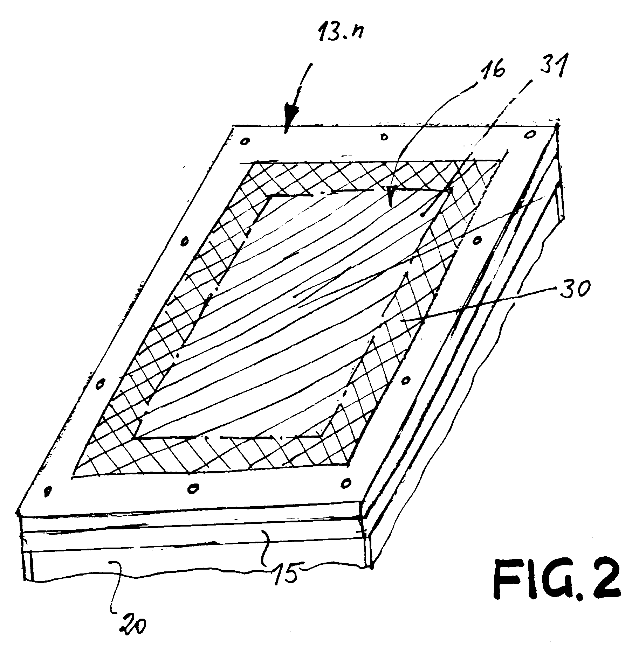

Wie insbesondere aus der (schematisierten) Fig. 2 erkennbar ist, weisen die Membranen 16 bzw. 16' jeweils Bereiche 30 bzw. 31 unterschiedlicher Elastizität auf, und zwar ist jeweils ein am Membran-Randbereich befindlicher erster Membranbereich 30 jeder Membran 16 bzw. 16' (nennenswert) elastischer als der weiter innen liegende zweite Membranbereich 31, der in Fig. 2 (lediglich) schraffiert ist, während der erste Membranbereich 31 zur Verdeutlichung kreuzschraffiert dargestellt ist.

Jede Membran-Stützplatte 15 ist Bestandteil eines Rahmens 20, der über Befestigungsholme 21 am Becherwerksgestell 14 gehalten ist, so daß der erfindungsgemäße dynamische Boden 13 ersichtlich ggf. auch ohne weiteres nachrüstbar ist.

Die Druckluftquelle 19 bildet zusammen mit einer Stromquelle 22 und einem Steuerungskasten 23 insgesamt eine Steuereinheit 24, die u. a. eine Kontrolleinheit sowie diverse Druckluftventile enthält.

In der Zeichnung sind die Abschnitte 13.1 und 13.2 jeweils mit ausgezogenen Linien im nicht aufgeblasenen Zustand dargestellt, während der Abschnitt 13.3 des dynamischen Bodens 13 gerade mit Druckluft beaufschlagt ist, so daß sich sein in der Zeichnung kreuzschraffiert dargestellter Zwischenraum mit der Folge vergrößert hat, daß seine Membran 16 sich in der wiedergegebenen Weise gewölbt und dabei den darüber befindlichen Abschnitt des im Sumpf 7 verdichteten/verhärteten Fördergutes über die Schöpfkontur 9 hinaus nach oben aufgebrochen/angehoben hat, so daß das entsprechende Fördergut damit in den Förderbereich des Bechers 4' gelangt und von diesem bzw. von nachfolgenden Becher 4 aufgenommen werden kann.

Dabei ist anhand des Abschnittes 13.3 des dynamischen Bodens 13 ein Ausführungsbeispiel dargestellt, bei dem die Membran 16' zwar an sich luftundurchlässig ausgebildet und auch an ihren Rand umlaufend luftdicht mit der zugehörigen Membran-Stützplatte 15 verbunden ist, jedoch einige Luftaustrittsöffnungen 25 aufweist, aus denen bei Druckluftbeaufschlagung des Kissen-Zwischenraums 17' des Abschnittes 13.3 des dynamischen Bodens 13 Druckluftstrahlen 26 aus den Luft-Austrittsöffnungen 25 der Membran 16' in den verdichteten Schüttgutsumpf entweichen können, um die Aufbrechwirkung des dynamischen Bodens 13 zu erhöhen.

Es hat sich jedoch gezeigt, daß es derartiger Luft-Austrittsöffnungen 25 od. dgl. in aller Regel nicht bedarf, um das hier in Rede stehende technische Problem befriedigend zu lösen, sondern daß die Kissenwirkung der sich unter Druckluftbeaufschlagung jeweils über der zugehörigen Membran-Stützplatte 15 aufblasenden Membran 16 in der Regel völlig ausreicht, um verdichtetes/verhärtetes Schüttgut im Sumpf 7 des Becherwerks aufzubrechen um einer Abförderung zuzuführen.

Dabei ist die Druckluftbeaufschlagung durch die Steuereinheit 24 regelmäßig so gesteuert, daß die einzelnen Abschnitte 13.1, 13.2 und 13.3 des dynamischen Bodens 13 nicht gleichzeitig aktiviert werden, sondern nacheinander, um damit zu erreichen, daß nicht zuviel verdichtetes/verhärtetes Schüttgut auf einmal in den Förderbereich gelangt. Der jeweilige Kissen-Zwischenraum 17 bzw. 17' der einzelnen Abschnitte 13.1, 13.2 und 13.3 wird vielmehr im Bedarfsfalle - ggf. zeitlich periodisch gesteuert - nacheinander aufgeblasen, wobei nach jeder vollständigen Luftbefüllung, die bspw. druckgesteuert erfolgen kann, die Druckluftzufuhr abgestellt und die betreffende Leitung 18 freigeschaltet wird, so daß sich der betreffende Abschnitt 13.1 bzw. 13.2 bzw. 13.3 langsam entspannen kann. Dabei gelangt durch Nachströmen, frisches nicht verdichtetes Schüttgut in den Becherwerksfuß 1 und damit in den Sumpf 7, so daß sich letzterer neu ausbilden kann, und zwar als frisches, nicht verhärtetes Fördergut. Die Membran zieht sich wieder auf ihhren Ausgangszustand zusammen, ohne daß an irgendeiner Stelle Fördergut eingeklemmt werden kann.

Falls dieses für das betreffende Schüttgut unkritisch ist, kann die Steuerung selbstverständlich ggf. auch so erfolgen, daß sämtliche Abschnitte des dynamischen Bodens 13 gleichzeitig aktiviert (und wieder deaktiviert) werden.

Der Druckluftspeicher 27 ist vorgesehen, da es sich als höchst zweckmäßig herausgestellt hat, den dynamischen Boden 13 bzw. dessen Abschnitte 13.n nicht unmittelbar/direkt an die Druckluftquelle 19 anzuschließen, weil in einem solchen Falle im allgemeinen eine Regelung bzw. Steuerung des den dynamischen Boden 13 beaufschlagenden Druckes geboten (zumindest zweckmäßig) ist. In diesem Zusammenhang wird auf folgende verwiesen:

In der Regel ist eine (im allgemeinen aus einem Elastomer bestehende) Membran bei Verwendung in einem erfindungsgemäßen dynamischen Boden 13 "von Haus aus" an sich nicht (sonderlich) geeignet, den von der Druckluftzuleitung 18 bzw. 18.n zugeführten/erzeugten Druck (von z. B. 8 bar) auszunehmen. Im übrigen ist es für die angestrebte Wirkungsweise auch nicht erforderlich, daß die Membran(en) des dynamischen Bodens 13 über den gesamten Arbeitszyklus mit einem hohen Druck beaufschlagt wird (werden), weil - aufgrund der relativ großen Arbeitsfläche des dynamischen Bodens 13 - in der Aufblas-Endphase ohnehin lediglich ein relativ kleiner Druck notwendig ist, um das verdichtete Fördergut aus dem Sumpf 7 in den Schöpfbereich 11 anzuheben. Vielmehr ist es in der Regel völlig ausreichend, wenn lediglich in der Anfangsphase der Druckbeaufschlagung ein relativ großer Druck zur Verfügung gestellt wird, um das im Sumpf 7 verdichtete/verhärtete Schüttgut loszubrechen.

Unter Berücksichtigung dieser Gesichtspunkte ist bei dem in der Zeichnung dargestellten Ausführungsbeispiel gemäß einer höchst bevorzugten Ausgestaltung der vorliegenden Erfindung zwischen die Druckluftquelle 19 und dem dynamischen Boden 13 der Druckluftspeicher 27 geschaltet worden, und sind die Ventile 28, 29 vorgesehen worden, welche über zum Steuerungskasten 23 führende Steuerleitungen 33 bzw. 34 von der Steuerungslogik der Steuereinheit 24 zu betätigen sind.

Dabei kann für den beim Ausführungsbeispiel vorgesehenen Fall, daß mehrere dynamische Bodenabschnitte 13.n vorgesehen sind, die gleichzeitig aktiviert werden sollen jeder Abschnitt 13.n ein gesonderter Druckspeicher 27 zugeordnet sein, während man bei einem einzigen dynamischen Boden 13 wie auch bei einer seriellen Schaltungsweise mehrerer dynamischer Bodenabschnitte 13.n mit einem einzigen Druckspeicher 27 auskommt, und dieses gemäß dem Ausführungsbeispiel auch dann der Fall ist, wenn diesem bzw. dem ihm in Strömungsrichtung nachgeordneten Ventil 29 ein Mehr-Wege-Ventil 32 nachgeordnet ist.

Eine derartige Einrichtung arbeitet wie folgt:

Mit dem von der Steuereinheit 24 ausgesandten Signal, daß ein dynamischer Bodenabschnitt 13.n mit Druckluft beaufschlagt werden soll, wird das als pneumatisches Steuerventil ausgebildete Ventil 28 so geschaltet, daß ein freier Durchgang zwischen dem Druckluftspeicher 19 und - bei entsprechender Einstellung des Drei-Wege-Ventils 32 - zwischen einem der dynamischen Bodenabschnitte 13.n (bspw. dem Abschnitt 18.3) entsteht. Dadurch gelangt der im Druckspeicher 27 vorhandene Druck von z. B. 8 bar in den Kissen-Zwischenraum 17 des betreffenden dynamischen Bodenabschnittes 13.n und breitet sich dort, da die Membran 16 bzw. 16' noch nicht aufgeblasen ist, bei zunächst sehr kleinem Volumen auf großer Fläche aus, so daß eine diesem hohen Druck entsprechende große (Losbrech-)Kraft von der Membran 16 bzw. 16' auf das verdichtete/gehärtete Fördergut im Sumpf 7 ausgeübt wird, die ohne weiteres ausreicht, um das auf der Membran 16 bzw. 16' lastende Fördergut loszubrechen und anzuheben.

Wenn die Membran 16 bzw. 16' aufgeblasen wird, so daß sich das Volumen des Kissen-Zwischenraums 17 (in Richtung auf den Schöpfbereich 11) erweitert und dabei das Fördergut anhebt, strömt Druckluft aus dem Druckluftspeicher 27 nach, wobei sich in der Endphase des Arbeitszyklusses ein Druckgleichgewicht zwischen dem Druckluftspeicher 19 und dem Kissen-Zwischenraum 17 einstellt. In diesem Zustand besteht mithin ein Gleichgewicht zwischen der von dem auf der Membran 16 bzw. 16' aufliegenden Fördergut erzeugten Kraft zzgl. der Rückstellkraft der Membran einerseits und dem im Kissen-Zwischenraum 17 zu diesem Zeitpunkt vorherrschenden Druck (von z. B. 0,5 bar) andererseits.

Der Zustand des freien Durchgangs zwischen dem Druckluftspeicher 19 und dem dynamischen Boden 13 bzw. einen dynamischen Bodenabschnitt 13.n kann bspw. über einen Zeitraum von 2 Min. aufrechterhalten werden. Danach wird die Ventilanordnung derart umgeschaltet, daß die Luftzuleitung zum dynamischen Boden 13 bzw. den mit Druckluft beaufschlagten dynamischen Bodenabschnitt 13.n freigeschaltet wird, so daß sich die gebildete Luftblase mit dem nachströmenden Fördergut zurückbildet. Gleichzeitig (oder kurz danach) wird der Ausgang des Druckluftspeichers 19 geschlossen, so daß dieser erneut mit Druckluft aufgeladen werden kann.

Bei serieller Schaltungsweise mit insgesamt nur einem Druckluftspeicher 27 steht dieser nach dem erneuten Aufladen dann dem nächsten dynamischen Bodenabschnitt zur Verfügung, wobei sich der Arbeitsablauf sogleich oder aber auch mit zeitlicher Verzögerung wiederholt.

Zusätzlich hat die Zwischenschaltung (wenigstens) eines Druckspeichers 27 den Vorteil, daß dem Festigkeitsabfall der sich jeweils ausdehnenden Membran 16 bzw. 16' Rechnung getragen wird. Dies ergibt sich bekanntlich aus der Eigenschaft, daß eine sich ausdehnende, flexible Membran lediglich einer degressiven Druckgasbeaufschlagung bedarf, um sich von einem Aufblaszwischenzustand weiter auszudehnen, weil sich mit der Ausdehnung der Membran zwangsläufig eine Wandstärkenverdickung ergibt. Dieses hinlänglich bekannte Phänomen ist selbst Laien bspw. daher bekannt, daß es zum Aufblasen eines Luftballons lediglich im ersten Aufblasmoment eines hohen Druckes bedarf, während beim weiteren Aufblasen ein (erheblich) geringerer Druck ausreicht.

Die in der Zeichnung unter Bezugnahme auf Fig. 2 erläuterte Ausgestaltung der Membran(en) 16 bzw. 16' mit unterschiedlicher Elastizität - nämlich einer höheren Elastizität im Membran-Randbereich 30 und einer geringeren Elastizität im weiter innen liegenden Membranbereich 31 - ist deshalb höchst zweckmäßig, weil sich bei einer solchen Ausgestaltung beim Aufblasen der Membran(en) 16 bzw. 16' eine relativ gleichmäßige Membranbewegung in Richtung des Schöpfbereiches 11 (= Becherbahn) ergibt, also nicht nur im mittleren Membranbereich 30 ein größerer Hub in Richtung auf den Schöpfbereich 11 erfolgt, sondern mehr oder weniger über die gesamte Membranfläche, wie dieses in Fig. 1 unten links anhand der Membran 16 mit einer strichpunktierten Linie 16* angedeutet ist.

Die erfindungsgemäße Ausgestaltung hat über die bereits beschriebenen Vorteile hinaus weiterhin zur Folge, daß die auf die Spanntrommel 3 einwirkende Vorspannkraft F erheblich kleiner als bei konventionellen Schöpfbecherwerken gehalten werden kann, bzw. daß an der Spanntrommel 3 ggf. keine mittels einer Spanneinrichtung gesondert erzeugte Vorspannkraft vorgehalten zu werden braucht, da das Lehrtrum bereits eine hinreichend große Vorspannung dafür erzeugt, damit der Gurt 2 an der in der Zeichnung nicht dargestellten Antriebstrommel die dort einzuleitende Umfangskraft durch Reibung übertragen kann. Auf jeden Fall kann die Größe der Spannkraft F auf ein Maß beschränkt werden, welches ausreicht, um die am Gurt 2 befestigten Becher 4 ordnungsgemäß um die Spanntrommel 3 zu führen.

## Patentansprüche

1. Becherwerk mit einem jeweils an seinem Kopf und seinem Fuß (1) geführten, umgelenkten, vorgespannten, endlosen Zugorgan (2) an dem Becher (4) befestigt sind, welche zu förderndes Schüttgut aus dem Bereich des Becherwerksfußes (1) aufnehmen und im Kopfbereich wieder abgeben, dadurch gekennzeichnet, daß im Bereich des Becherwerksfußes (1) unterhalb der Becherbahnkontur (9) ein dynamischer Boden (13) angeordnet ist, der im wesentlichen aus einer am Becherwerksgestell (14) gehaltenen Membran-Stützplatte (15) od. dgl. sowie wenigstens einer auf deren Oberseite aufliegenden, an ihrem Rand umlaufenden mit der Membran-Stützplatte (15) verbundenen, elastischen Membran (16) besteht, wobei der kissenbildende Zwischenraum (17) zwischen der Unterseite der Membran (16) und der dieser zugekehrten Oberseite der Membran-Stützplatte (15) mit einer Druckgasquelle (19) verbunden ist.

2. Becherwerk nach Anspruch 1, dadurch gekennzeichnet, daß eine Entlüftungseinrichtung (z. B. 25) vorgesehen ist, mittels welcher in den Kissen-Zwischenraum (17) geleitetes Druckgas wenigstens teilweise wieder aus diesem abzuleiten ist.

3. Becherwerk nach Anspruch 1 oder 2, dadurch gekennzeichnet, daß die Membran (16) gasdicht ausgebildet und gasdicht mit der Membran-Stützplatte (15) verbunden ist.

4. Becherwerk nach einem oder mehreren der vorhergehenden Ansprüche, dadurch gekennzeichnet, daß der dynamische Boden (13) aus mehreren Abschnitten (13.1, 13.2, 13.3) besteht.

5. Becherwerk nach Anspruch 4, dadurch gekennzeichnet, daß der dynamische Boden (13) aus drei Abschnitten (13.1, 13.2, 13.3) besteht.

6. Becherwerk nach Anspruch 4, dadurch gekennzeichnet, daß der dynamische Boden (13) aus fünf Abschnitten besteht.

7. Becherwerk nach einem oder mehreren der vorhergehenden Ansprüche, dadurch gekennzeichnet, daß der dynamische Boden (13) wenigstens an/mit einem Abschnitt (13.1) am/benachbart zum Boden des Becherwerksgestell (14) angeordnet ist.

8. Becherwerk nach Anspruch 7, dadurch gekennzeichnet, daß die Membran-Stützplatte (15) des dynamischen Bodens (13) bzw. eines am Boden des Becherwerksgestells (14) angeordneten dynamischen Bodenabschnittes (13.1) von dem Boden des Becherwerksgestells (14) gebildet ist.

9. Becherwerk nach einem oder mehreren der vorhergehenden Ansprüche, dadurch gekennzeichnet, daß wenigstens ein dynamischer Bodenabschnitt (13.2, 13.3) zum Boden des Becherwerksgestells (14) angestellt ist.

10. Becherwerk nach Anspruch 2, dadurch gekennzeichnet, daß die dynamischen Bodenabschnitte (13.1, 13.2, 13.3) jeweils einzeln bzw. gruppenweise über eine gesonderte Druckgasleitung (18) mit der/einer Druckgasquelle (19) verbunden sind.

11. Becherwerk nach einem oder mehreren der vorhergehenden Ansprüche, gekennzeichnet durch eine Steuereinrichtung (24), mittels welcher ggf. ein oder mehrere dynamische Bodenabschnitte (13.1, 13.2, 13.3) gleichzeitig bzw. nacheinander mit Druckgas zu beaufschlagen sind.

12. Becherwerk nach Anspruch 11, dadurch gekennzeichnet, daß mittels der Steuereinrichtung (24) wahlweise ein oder mehrere dynamische Bodenabschnitte (13.1, 13.2, 13.3) zu entgasen sind.

13. Becherwerk nach Anspruch 11, dadurch gekennzeichnet, daß die dynamischen Bodenabschnitte (13.1, 13.2, 13.3) mittels eines vorgegebenen Programms in bestimmter Reihenfolge und/oder in bestimmten Zeitintervallen mit Druckgas zu beaufschlagen und (ggf. teilweise) wieder zu entspannen sind.

14. Becherwerk nach einem oder mehreren der vorhergehenden Ansprüche, dadurch gekennzeichnet, daß der kissenbildende Zwischenraum (17) des (eines) dynamischen Boden(abschnittes) (13) so mit Druckgas zu beaufschlagen ist, daß der Druck zu Beginn eines Beaufschlagungsintervalls erheblich höher ist als am Ende des Beaufschlagungsintervalls.

15. Becherwerk nach einem oder mehreren der vorhergehenden Ansprüche, dadurch gekennzeichnet, daß die Druckgasquelle eine Druckluftquelle ist.

16. Becherwerk nach einem oder mehreren der vorhergehenden Ansprüche, dadurch gekennzeichnet, daß zwischen der Druckgasquelle (19) und dem (einem) dynamischen Boden(abschnitt) (13 bzw. 13.1, 13.2, 13.3) ein Druckspeicher (27) angeordnet ist.

17. Becherwerk nach Anspruch 16, dadurch gekennzeichnet, daß zwischen der Druckgasquelle (19) und dem Druckspeicher (27) und/oder dem Druckspeicher (27) und dem (einem) dynamischen Boden(abschnitt) (13 bzw. 13.1, 13.2, 13.3) ein von der (Logik der) Steuereinheit (24) betätigbares Ventil (28 bzw. 29) angeordnet ist.

18. Becherwerk nach Anspruch 17, dadurch gekennzeichnet, daß die Ventile (28, 29) als pneumatische Steuerventile ausgebildet sind.

19. Becherwerk nach einem oder mehreren der Ansprüche 16 bis 18, dadurch gekennzeichnet, daß das Volumen des Druckspeichers (27) nennenswert kleiner als das Volumen des Kissen-Zwischenraums (17) des dynamischen Bodens (13) bzw. eines dynamischen Bodenabschnitts (13.1, 13.2, 13.3) ist.

20. Becherwerk nach einem oder mehreren der vorhergehenden Ansprüche, dadurch gekennzeichnet, daß die Membran(en) (16, 16') Bereiche (30, 31) unterschiedlicher Elastizität aufweist (aufweisen).

21. Becherwerk nach Anspruch 20, dadurch gekennzeichnet, daß ein am Membran-Randbereich befindlicher erster Membranbereich (30) der (einer) Membran (16, 16') elastischer ist als der (ein) weiter innen liegender zweiten Membranbereich (31).

22. Becherwerk nach einem oder mehreren der vorhergehenden Ansprüche, dadurch gekennzeichnet, daß die Ausbildung des dynamischen Bodens (13)/der dynamischen Bodenabschnitte (13.n) bzw. dessen (deren) Membran(en) (16) und der Druckgasquelle (19) bzw. dem (den) Druckspeicher(n) (27) so getroffen ist, daß im voll aufgeblasenen Membranzustand noch ein erheblicher Abstand (S) zur Schöpfkontur (9) vorhanden ist, der gleich dem Mehrfachen der maximalen Korn- bzw. Stückgröße des Fördergutes ist.

23. Becherwerk nach einem oder mehreren der vorhergehenden Ansprüche, dadurch gekennzeichnet, daß ein Druckgasspeicher (27) in Relation zu einem aufzublasenden kissehbildenden Zwischenraum (17) so dimensioniert bzw. beim Aufblasen derart gesteuert ist, daß das Aufblasen nur verhältnismäßig langsam erfolgt.

24. Becherwerk nach Anspruch 23, dadurch gekennzeichnet, daß ein kissehbildender Zwischenraum (17) innerhalb eines Zeitraums von mehr als ca. 10 bis 15 sec. aufzublasen ist.

25. Becherwerk nach Anspruch 23 und 24, dadurch gekennzeichnet, daß ein kissenbildender Zwischenraum (17) innerhalb eines Zeitraums von etwa einer halben Minute aufzublasen ist.

## Claims

1. A bucket conveyor comprising an endless traction means (2) which is prestressed, deflected and guided at its head and its foot (1) and to which are fastened buckets (4) which receive bulk material for conveying from the region of the bucket-conveyor foot (1) and discharge it at the head region, characterised in that a dynamic floor (13) is disposed in the region of the bucket-conveyor foot (1) below the bucket-chain contour (9) and substantially comprises a diaphragm-supporting plate (15) or the like held on the bucket-conveyor frame (14) and at least one resilient diaphragm (16) resting on the top of the plate (15) and connected thereto around its edge, the intermediate space (17) which forms a cushion between the underside of the diaphragm (16) and the facing upper surface of the supporting plate (15) being connected to a compressed-gas source (19).

2. A bucket conveyor according to claim 1,
characterised in that a venting device (e.g. 25) is provided for at least partially removing compressed gas after it has been introduced into the cushion or intermediate space (17).

3. A bucket conveyor according to claim 1 or 2,
characterised in that the diaphragm (16) is gas-tight and is connected in gas-tight manner to the diaphragm-supporting plate (15).

4. A bucket conveyor according to one or more of the preceding claims, characterised in that the dynamic floor (13) is made up of a number of sections (13.1, 13.2, 13.3).

5. A bucket conveyor according to claim 4,
characterised in that the dynamic floor (13) consists of three sections (13.1, 13.2, 13.3).

6. A bucket conveyor according to claim 4,
characterised in that the dynamic floor (13) consists of five sections.

7. A bucket conveyor according to one or more of the preceding claims, characterised in that the dynamic floor (13) or at least one section (13.1) thereof is disposed at or near the base of the bucket-conveyor frame (14).

8. A bucket conveyor according to claim 7,
characterised in that the diaphragm-supporting plate (15) of the dynamic floor (13) or of a dynamic floor section (13.1) disposed at the bottom of the bucket-conveyor frame (14) is formed by the bottom of the bucket-conveyor frame (14).

9. A bucket conveyor according to one or more of the preceding claims, characterised in that at least one dynamic floor section (13.2, 13.3) is inclined to the bottom of the bucket-conveyor frame (14).

10. A bucket conveyor according to claim 2,
characterised in that the dynamic floor sections (13.1, 13.2, 13.3) are connected singly or in groups via a separate compressed-gas line (18) to the/a source (19) of compressed gas.

11. A bucket conveyor according to one or more of the preceding claims, characterised by a control device (24) by means of which one or more dynamic floor sections (13.1, 13.2, 13.3) can be supplied simultaneously or successively with compressed gas.

12. A bucket conveyor according to claim 11,
characterised in that one or more dynamic floor sections (13.1, 13.2, 13.3) can be degassed when required by the control device (24).

13. A bucket conveyor according to claim 11,
characterised in that the dynamic floor sections (13.1, 13.2, 13.3) are supplied with compressed gas and (optionally partially) decompressed in a predetermined sequence and/or at predetermined times in accordance with a set program.

14. A bucket conveyor according to one or more of the preceding claims, characterised in that the cushion-forming intermediate space (17) in the (a) dynamic floor (section) (13) is so supplied with compressed gas that the pressure at the beginning of a pressurising interval is considerably greater than at the end of the pressurising interval.

15. A bucket conveyor according to one or more of the preceding claims, characterised in that the compressed-gas source is a compressed-air source.

16. A bucket conveyor according to one or more of the preceding claims, characterised in that a pressure reservoir (27) is disposed between the compressed-gas source (19) and the (a) dynamic floor (section) (13 or 13.1, 13.2, 13.3).

17. A bucket conveyor according to claim 16,
characterised in that a valve (28 or 29) actuated by the (logic unit of the) control unit (24) is disposed between the compressed-gas source (19) and the pressure reservoir (27) and/or the pressure reservoir (17) and the (a) dynamic floor (section) (13 or 13.1, 13.2, 13.3).

18. A bucket conveyor according to claim 17,
characterised in that the valves (28, 29) are in the form of pneumatic control valves.

19. A bucket conveyor according to one or more of claims 16 to 18, characterised in that the volume of the pressure reservoir (27) is appreciably less than the volume of the cushion or intermediate space (17) in the dynamic floor (13) or a dynamic floor section (13.1, 13.2, 13.3).

20. A bucket conveyor according to one or more of the preceding claims, characterised in that the diaphragm or diaphragms (16, 16') have regions (30, 31) of varying elasticity.

21. A bucket conveyor according to claim 20,
characterised in that a first region (30) of the (one) diaphragm (16, 16') at the edge region thereof is more resilient than the (a) second region (31) further inside the diaphragm.

22. A bucket conveyor according to one or more of the preceding claims, characterised in that the dynamic floor (13)/the dynamic floor sections (13.n) or their diaphragm or diaphragms (16) and the compressed-gas source (19) or the pressure reservoir or reservoirs (27) are so constructed that when the diaphragm is fully inflated there is still a considerable distance (S) from the scoop contour (9), equal to a multiple of the maximum grain size or piece size of the conveyed material.

23. A bucket conveyor according to one or more of the preceding claims, characterised in that a compressed-gas reservoir (27) is so dimensioned relative to an inflatable cushion-forming intermediate space (17) or is so controlled during inflation that the inflation process occurs relatively slowly.

24. A bucket conveyor according to claim 23,
characterised in that a cushion-forming intermediate space (17) is inflated within a time of more than about 10 to 15 seconds.

25. A bucket conveyor according to claims 23 and 24,
characterised in that a cushion-forming intermediate space (17) is inflated within a time of about half a minute.

## Revendications

1. Mécanisme à godets comprenant un organe de traction sans fin (2) qui est précontraint, dévié et guidé à sa tête et à son pied (1) et auquel sont fixés des godets (4) qui ramassent du matériau en vrac à transporter dans la zone du pied (1) du mécanisme à godets et le déchargent dans la zone de tête, caractérisé en ce que, dans la zone du pied (1) du mécanisme à godets, au-dessous du contour (9) correspondant à la trajectoire des godets, est disposé un fond dynamique (13) constitué pour l'essentiel d'une plaque d'appui de membrane (15) ou analogue, maintenue contre le bâti (14) du mécanisme à godets, ainsi que d'au moins une membrane élastique (16) qui est appliquée sur le dessus de ladite plaque d'appui (15) et qui y est reliée au niveau de son bord sur toute sa périphérie, l'interstice formant coussin (17) compris entre le dessous de la membrane (16) et le dessus en vis-à-vis de la plaque d'appui de membrane (15) étant relié à une source de gaz comprimé (19).

2. Mécanisme à godets selon la revendication 1, caractérisé en ce qu'il est prévu un dispositif de purge d'air (ex. 25) pour évacuer, au moins en partie, de l'interstice (17) formant coussin le gaz comprimé qui y a été envoyé.

3. Mécanisme à godets selon la revendication 1 ou 2, caractérisé en ce que la membrane (16) est étanche aux gaz et est reliée à la plaque d'appui de membrane (15) de manière étanche aux gaz.

4. Mécanisme à godets selon une ou plusieurs des revendications précédentes, caractérisé en ce que le fond dynamique (13) se compose de plusieurs segments (13.1, 13.2, 13.3).

5. Mécanisme à godets selon la revendication 4, caractérisé en ce que le fond dynamique (13) se compose de trois segments (13.1, 13.2, 13.3).

6. Mécanisme à godets selon la revendication 4, caractérisé en ce que le fond dynamique (13) se compose de cinq segments.

7. Mécanisme à godets selon une ou plusieurs des revendications précédentes, caractérisé en ce que, au niveau/par l'intermédiaire d'un segment (13.1), le fond dynamique (13) est disposé contre le fond du bâti (14) du mécanisme à godets ou à son voisinage.

8. Mécanisme à godets selon la revendication 7, caractérisé en ce que la plaque d'appui de membrane (15) du fond dynamique (13) ou d'un segment de fond dynamique (13.1) disposé contre le fond du bâti (14) du mécanisme à godets est formée par le fond du bâti (14) du mécanisme à godets.

9. Mécanisme à godets selon une ou plusieurs des revendications précédentes, caractérisé en ce qu'au moins un segment de fond dynamique (13.2, 13.3) est incliné par rapport au fond du bâti (14) du mécanisme à godets.

10. Mécanisme à godets selon la revendication 2, caractérisé en ce que les segments de fond dynamique (13.1, 13.2, 13.3) sont reliés individuellement ou en groupe à la/une source de gaz comprimé (19) par l'intermédiaire d'une conduite séparée de gaz comprimé (18).

11. Mécanisme à godets selon une ou plusieurs des revendications précédentes, caractérisé par un dispositif de commande (24) permettant d'alimenter simultanément ou successivement en gaz comprimé le cas échéant un ou plusieurs segments de fond dynamique (13.1, 13.2, 13.3).

12. Mécanisme à godets selon la revendication 11, caractérisé en ce que le dispositif de commande (24) permet de purger sélectivement de leur gaz un ou plusieurs segments de fond dynamique (13.1, 13.2, 13.3).

13. Mécanisme à godets selon la revendication 11, caractérisé en ce que les segments de fond dynamique (13.1, 13.2, 13.3) peuvent être alimentés en gaz comprimé et (le cas échéant partiellement) à nouveau décompressés au moyen d'un programme prédéfini, dans un ordre déterminé et/ou à des intervalles de temps déterminés.

14. Mécanisme à godets selon une ou plusieurs des revendications précédentes, caractérisé en ce que l'interstice (17) formant coussin du (d'un segment de) fond dynamique (13) est alimenté en gaz comprimé de façon que la pression soit nettement plus élevée au début d'un intervalle d'alimentation qu'à la fin dudit l'intervalle d'alimentation.

15. Mécanisme à godets selon une ou plusieurs des revendications précédentes, caractérisé en ce que la source de gaz comprimé est une source d'air comprimé.

16. Mécanisme à godets selon une ou plusieurs des revendications précédentes, caractérisé en ce qu'un accumulateur de pression (27) est implanté entre la source de gaz comprimé (19) et le (un segment de) fond dynamique (13 ou 13.1, 13.2, 13.3).

17. Mécanisme à godets selon la revendication 16, caractérisé en ce qu'une valve (28 ou 29) actionnée par (le circuit logique de) l'unité de commande (24) est implantée entre la source de gaz comprimé (19) et l'accumulateur de pression (27) et/ou entre l'accumulateur de pression (27) et le (un segment de) fond dynamique (13 ou 13.1, 13.2, 13.3).

18. Mécanisme à godets selon la revendication 17, caractérisé en ce que les valves (28, 29) sont conçues sous la forme de valves de commande pneumatique.

19. Mécanisme à godets selon une ou plusieurs des revendications 16 à 18, caractérisé en ce que le volume de l'accumulateur de pression (27) est nettement inférieur au volume de l'interstice (17) formant coussin du fond dynamique (13) ou d'un segment de fond dynamique (13.1, 13.2, 13.3).

20. Mécanisme à godets selon une ou plusieurs des revendications précédentes, caractérisé en ce que la (les) membrane(s) (16, 16') comporte (comportent) des zones (30, 31) d'élasticité différente.

21. Mécanisme à godets selon la revendication 20, caractérisé en ce qu'une première zone (30) située dans la zone de bord de la (d'une) membrane (16, 16') est plus élastique que la (qu'une) seconde zone de membrane (31) située plus à l'intérieur.

22. Mécanisme à godets selon une ou plusieurs des revendications précédentes, caractérisé en ce que la conception du fond dynamique (13)/des segments de fond dynamique (13.n) ou de ses (leurs) membrane(s) (16) et de la source de gaz comprimé (19) ou de l'accumulateur (des accumulateurs) de pression (27) est prévue pour que, lorsque la (les) membrane(s) est (sont) entièrement gonflée(s), il subsiste, par rapport au contour de puisage (9), une distance importante (S) égale à plusieurs fois la grosseur maximale des grains ou des morceaux du matériau à transporter.

23. Mécanisme à godets selon une ou plusieurs des revendications précédentes, caractérisé en ce que, par rapport à un interstice (17) formant coussin à gonfler, un accumulateur de gaz comprimé (27) est dimensionné ou commandé lors du gonflage de façon que le gonflage s'effectue de façon relativement lente.

24. Mécanisme à godets selon la revendication 23, caractérisé en ce qu'un interstice (17) formant coussin peut être gonflé dans un temps supérieur à environ 10 à 15 secondes.

25. Mécanisme à godets selon les revendications 23 et 24, caractérisé en ce qu'un interstice (17) formant coussin peut être gonflé dans un temps d'environ une demiminute.
